# FASCICULE DE BREVET EUROPEEN

(11) **EP 4 098 642 B1**
(45) Date de publication et mention de la délivrance du brevet: **12.02.2025**
(21) Numéro de dépôt: 22176934.2
(22) Date de dépôt: 02.06.2022
(51) Int. Cl.: C06B 23/00

(54) **COMPOSITION EXPLOSIVE FUSIBLE/COULABLE ET SON PROCEDE DE FABRICATION**
SCHMELZBARE/GUSSFÄHIGE EXPLOSIVE ZUSAMMENSETZUNG UND IHR HERSTELLUNGSVERFAHREN
MELTABLE/CASTABLE EXPLOSIVE COMPOSITION AND METHOD FOR MANUFACTURING SAME

(30) Priorité: 03.06.2021 FR 2105849
(43) Date de publication de la demande: 07.12.2022
(73) Titulaire: THALES, 92190 Meudon (FR)
(72) Inventeur: GILLOUX, Teddy, 45240 La Ferte Saint Aubin (FR); COULOUARN, Christophe, 45240 La Ferte Saint Aubin (FR); BULOT, Stéphane, 45240 La Ferte Saint Aubin (FR)
(74) Mandataire: Atout PI Laplace

(56) Documents cités:
- EP-A1- 0 661 251
- EP-A1- 0 814 069
- GB-A- 574 879
- US-A- 4 063 975
- CHEMICAL ABSTRACTS, CHEMICAL ABSTRACTS SERVICE (C A S), US, 9 June 1997 (1997-06-09), XP000666219, ISSN: 0009-2258

## Description

La présente invention se situe dans le domaine des compositions explosives fusibles/coulables. Elle peut s'appliquer au domaine du chargement explosif des munitions par le procédé de coulé-fondu.

Les compositions explosives à base de matrice fusible/coulable existantes, mise en oeuvre par la technologie des coulée-fondues sont par nature hétérogènes car différentes espèces granulaires, non solubles, se retrouvent dispersées aléatoirement dans ce média fusible lors de la phase de mélange. Néanmoins, à l'issue du procédé de mise en oeuvre, ces chargements doivent répondre à des exigences de plus en plus sévères. D'une part, les compositions explosives fusibles/coulables doivent assurer une homogénéité en tout point de l'objet chargé afin d'assurer les performances de sécurité et les performances fonctionnelles (amorçabilité, détoniques, vulnérabilité - signature MURAT, abréviation de Munitions à Risques Atténués). Et d'autre part, elles doivent répondre aux contraintes spécifiques de l'homologation des matériaux énergétiques de défense. La bonne tenue de la composition explosive aux précédentes performances doit permettre à la munition de répondre de façon fiable lors de son utilisation opérationnelle tout en diminuant les risques de déclenchement intempestif lors d'accident de manipulation ou d'attaque délibérées ; et si l'explosion accidentelle a lieu, de diminuer les dégâts collatéraux pour le personnel et la plate-forme de lancement.

Ainsi, il est indispensable d'assurer la meilleure homogénéité possible du chargement explosif après solidification dans le corps de la munition afin de fiabiliser la sécurité et les performances des munitions pendant tout leur profil de vie (production, stockage, transport, utilisation et démilitarisation). Ces formulations doivent également répondre à des exigences de plus en plus sévères (faible dispersion des propriétés physico-chimiques et mécaniques et conservation de ces propriétés après vieillissement) décrites pour la France dans l'instruction générale SCAT 17500 édition 6 datée de décembre 2019 et pour les membres de l'OTAN au STANAG.4170 édition 3 daté de 2008. Se conformer à ces exigences règlementaires nécessite une maîtrise accrue de l'homogénéité de chargement de la munition.

La maîtrise de l'homogénéité de la composition explosive dans la munition est donc une clé pour répondre à l'ensemble de ces exigences. Cette maîtrise est jusqu'à présent assurée par l'utilisation d'un seul constituant, ou l'ajout de divers additifs pour stabiliser le mélange comme les tensioactifs ou encore par un pourcentage massique en espèce granulaire supérieur à 60 %.

Historiquement les munitions étaient chargées à base d'acide picrique puis de 2,4,6-trinitrotoluène (TNT) après la deuxième guerre mondiale. Ces chargements étaient mono-composants, ils répondaient donc par nature à cette problématique d'homogénéité. Pour des raisons liées aux performances terminales et de vulnérabilité des munitions, de nombreuses formulations ont été mises au point en ajoutant des additifs à cette base TNT. La première piste a consisté à intégrer dans les formulations historiques des explosifs granulaires tels que le RDX (ou cyclotriméthylène-trinitramine, aussi connu sous le nom d'hexogène) et le HMX (abréviation de « High Melting point explosive » : explosif à point de fusion élevé, aussi appelé cyclotétraméthylène-tétranitramine ou octogène) afin d'augmenter très significativement les performances en détonique (on peut citer comme exemple la composition B 60/40 - RDX/TNT). Afin d'obtenir les performances souhaitées ainsi que pour maintenir une homogénéité pendant tout le cycle de chargement, un taux de l'ordre de 60 % en masse d'espèce(s) solide(s), de différentes répartitions granulométriques, est introduit. Ce taux permet d'augmenter significativement la viscosité du mélange liquide pour limiter les déphasages et sédimentations mais permet également de jouer sur la compacité des espèces. Le principe consiste à déterminer le plus précisément possible la répartition granulométrique qui permette d'introduire le maximum d'espèce granulaire dans un espace donné. Cela a pour effet principal de bloquer l'arrangement des espèces les unes par rapport aux autres.

Une première solution de l'art antérieur mise au point afin d'assurer l'homogénéité et la stabilité dans le temps de la composition est l'utilisation d'additifs de type tensioactif. Ces molécules ont la capacité de posséder une tête hydrophile et une queue hydrophobe permettant d'augmenter ainsi l'affinité entre le TNT et les flegmatisants, substances visant à rendre la composition explosive moins sensible aux chocs accidentels. Nous pouvons citer les compositions mentionnées dans les brevets FR2750131 et FR2954308 utilisant des tensioactifs de la famille des polyvinyl-pyrrolidones.

L'utilisation d'un ou plusieurs tensioactifs pour venir stabiliser la phase liquide tout au long du procédé de fabrication de la composition jusqu'à la solidification nécessite l'utilisation d'outils industriels spécifiques tels que des agitateurs foisonnants et rotor/stator d'une part. Ce type d'agitateur, usuellement utilisé dans l'industrie du cosmétique pour former des émulsions, est difficilement transférable sur des mélanges contenant des explosifs. En effet, par définition, ces pales génèrent de très fortes contraintes de cisaillement qui pourraient engendrer un incident pyrotechnique suite à un échauffement ou un frottement. D'autre part, les tensioactifs couramment utilisés dans ce domaine ont été développés pour l'industrie chimique, pharmaceutique, cosmétique et agroalimentaire. Ils ont pour objet de venir s'interfacer entre un corps « gras » (longue chaîne alkyl faiblement fonctionnalisée) et une phase aqueuse. Pour les formulations explosives à base TNT, il est plutôt question de stabiliser un mélange hétérogène voir non miscible entre deux corps « gras » de faible affinité chimique rendant la plupart des tensioactifs faiblement efficace voir inefficace. Une telle solution n'est donc pas optimale.

Une autre solution de l'art antérieur consiste à n'utiliser que des chargements explosifs mono-composants tels que le TNT ou le DNAN (dinitroanisole). Un tel chargement devient par nature parfaitement homogène, car mono-composant. Cependant, les propriétés intrinsèques de ces composants ne permettent pas de répondre aux exigences de performance demandées pour les munitions de nouvelle génération (signature MURAT, performances balistiques terminales augmentées (exemple : charge formée pour perforation de blindage, ...)).

Une autre solution de l'art antérieur consiste à augmenter très fortement le pourcentage de constituants solides (au-delà de 60 % en masse) et de moduler la répartition granulométrique de chacun des additifs solides afin d'atteindre le maximum de compacité. En effet, une fois que cette compacité est atteinte, les différentes espèces granulaires sont contraintes mécaniquement à ne pas sédimenter ou déphaser une fois chargées dans la munition. Néanmoins, en atteignant cette compacité, le mélange devient extrêmement visqueux et entraîne une limitation de la coulabilité de la composition obtenue. Il est alors souvent nécessaire d'augmenter la température du mélange, voire de générer une dépression dans les corps de munition (vide de l'ordre de 50 mbar). L'augmentation de la température amenant à une augmentation significative des dépenses d'énergie pour produire une munition et la mise sous vide de l'opération de chargement n'est pas compatible des outils standards utilisés par l'Homme de métier dans ce domaine technique.

GB574879 divulgue une composition explosive fusionnable/coulable flegmatisée comprenant 47% de TNT, 1,1% d'acide tannique et 42% de PETN. L'acide tannique est ajouté au TNT fondu.

L'invention vise à pallier tout ou partie des problèmes cités plus haut en proposant une composition explosive fusible/coulable permettant de répondre aux exigences imposées et de plus en plus sévères, à la fois en termes de performance opérationnelle et de sécurité pour signature MURAT, avec un faible nombre de composants. L'invention présente aussi l'avantage de ne pas nécessiter de changement d'outils de fabrication par rapport aux outils usuels du domaine technique. La composition de l'invention permet en outre un pilotage des performances souhaitées, pour le chargement obtenu après solidification de la composition, par une simple adaptation de la proportion de ses composants, sans impacter le procédé de fabrication de la composition.

A cet effet, l'invention a pour objet une composition explosive fusible/coulable comprenant au moins deux composants :
- un explosif fusible, l'explosif fusible étant préférentiellement un cycle aromatique nitré, et encore préférentiellement du 2,4,6-trinitrotoluène;
- un flegmatisant soluble à la température de fusion de l'explosif fusible,
- le flegmatisant étant présent en proportion massique non nulle et inférieure ou égale à 10% de la masse totale de la composition explosive fusible/coulable, préférentiellement entre 2 à 6% de la masse totale de la composition explosive fusible/coulable, et encore préférentiellement entre 3 et 5% de la masse totale de la composition explosive fusible/coulable ;
- l'explosif fusible étant présent en proportion massique supérieure à 20% et inférieure à 100% de la masse totale de la composition explosive fusible/coulable, préférentiellement supérieure à 30% et inférieure à 100% de la masse totale de la composition explosive fusible/coulable, et préférentiellement supérieure à 40% et inférieure à 100% de la masse totale de la composition explosive fusible/coulable, et encore préférentiellement supérieure à 50% et inférieure à 100% de la masse totale de la composition explosive fusible/coulable, la somme des proportions massiques des composants de la composition explosive fusible/coulable étant égale à 100%.

Avantageusement, le flegmatisant a une température de fusion supérieure à celle de l'explosif fusible.

Avantageusement, le flegmatisant a une densité supérieure à 1,0, préférentiellement supérieure à 1,2.

Dans un mode de réalisation de l'invention, le flegmatisant peut être un dérivé d'un parmi le benzène, le naphtalène, ou l'anthracène.

Dans un autre mode de réalisation de l'invention, le flegmatisant peut être un dérivé benzénique d'un parmi le benzène, le naphtalène, ou l'anthracène, fonctionnalisé par un ou plusieurs groupements parmi les groupements hydroxyles, carboxyles, ou sulphonyles.

Avantageusement, le flegmatisant est le naphtol, préférentiellement le napht-2-ol.

Dans un autre mode de réalisation de l'invention, la composition explosive fusible/coulable selon l'invention comprend en outre au moins un composant parmi une espèce granulaire inerte et/ou au moins une espèce granulaire énergétique, présent en proportion massique inférieure ou égale à 60% de la masse totale de la composition explosive fusible/coulable, préférentiellement inférieure ou égale à 50% de la masse totale de la composition explosive fusible/coulable.

L'invention concerne aussi une munition délimitée par un corps creux, le corps creux étant au moins partiellement rempli par une telle composition explosive fusible/coulable.

L'invention concerne aussi un procédé de fabrication d'une telle composition explosive fusible/coulable, comprenant les étapes suivantes :
- fonte de l'explosif fusible ;
- ajout du flegmatisant dans l'explosif fusible fondu ;
- mélange du flegmatisant dans l'explosif fusible fondu pour obtenir un mélange homogénéisé.

L'invention concerne aussi un procédé de chargement explosif d'une munition délimitée par un corps creux, comprenant :
- les étapes du procédé de fabrication d'une composition explosive fusible/coulable ;
- coulée dans le corps creux de la munition du mélange homogénéisé.

L'invention sera mieux comprise et d'autres avantages apparaîtront à la lecture de la description détaillée d'un mode de réalisation donné à titre d'exemple, description illustrée par le dessin joint dans lequel :
la [Fig.1] représente schématiquement le principe de l'émulsion d'une composition explosive fusible/coulable selon l'art antérieur ;
la [Fig.2] représente schématiquement le principe de la solubilisation d'une composition explosive fusible/coulable selon l'invention ;
la [Fig.3] représente schématiquement une munition comprenant une composition explosive fusible/coulable selon l'invention ;
la [Fig.4] représente un organigramme des étapes d'un procédé de fabrication d'une composition explosive fusible/coulable selon l'invention.

Par souci de clarté, les mêmes éléments porteront les mêmes repères dans les différentes figures. Pour une meilleure visibilité et dans un souci de compréhension accrue, les éléments ne sont pas toujours représentés à l'échelle.

L'objet de l'invention réside dans le fait d'assurer l'homogénéité de la composition, avec un procédé simple et reproductible pour tous types de concentrations, basé sur la solubilité du/des composants ajoutés. En outre, l'invention permet de limiter le nombre de composants dans la composition explosive fusible/coulable. Contrairement aux compositions de l'art antérieur connu qui tendent à ajouter de plus en plus de composants, tels que des tensioactifs, l'invention permet de garantir une excellente homogénéité de la composition explosive fusible/coulable en phase solide, tout en assurant un bon niveau d'insensibilité aux chocs accidentels et de bonnes performances détoniques en phase opérationnelle.

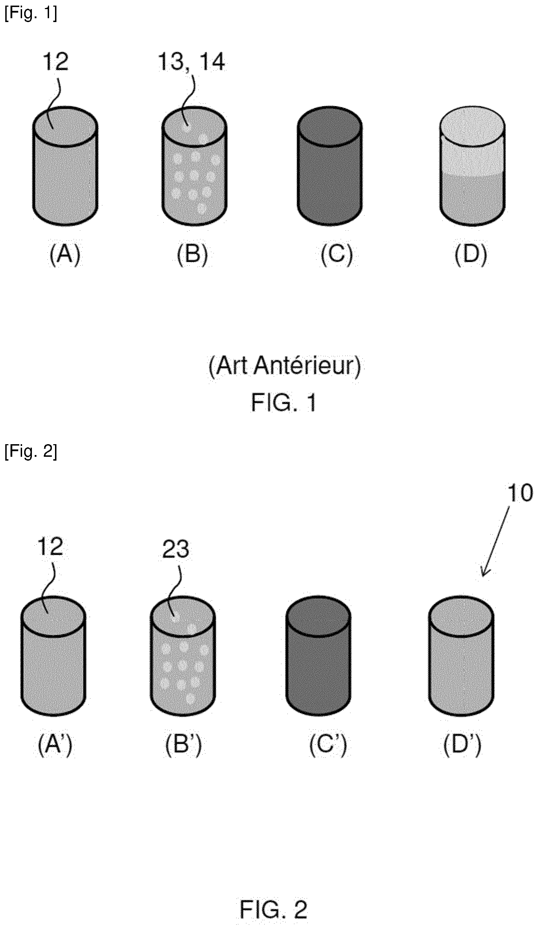

La figure 1 représente schématiquement le principe de l'émulsion d'une composition explosive fusible/coulable selon l'art antérieur. Une composition explosive fusible/coulable comprend classiquement un explosif fusible, par exemple du 2,4,6-trinitrotoluène (communément TNT). Il faut y ajouter un flegmatisant visant à rendre la composition explosive moins sensible aux chocs accidentels. De plus, dans les compositions existantes, et comme expliqué précédemment, des tensioactifs ou émulsifiants sont nécessaires pour assurer un certain niveau de mélange entre les molécules.

Les flegmatisants en usage sont principalement des mélanges de longues chaines alcanes linéaires ou faiblement ramifiées, ne présentant pas un taux de fonctionnalisation important. Ces molécules n'ont que de faibles interactions de Van der Waals et ont très peu d'affinité chimique avec le TNT. Pour des températures supérieures à la température de fusion du TNT (de l'ordre de 80,4 °C selon la pureté du TNT), elles forment des milieux diphasiques. L'utilisation d'un tensioactif est alors indispensable pour améliorer l'affinité chimique entre le TNT et les flegmatisants usuels (cires type paraffine). Ce tensioactif est sélectionné au travers d'une queue hydrophobe possédant une forte affinité chimique avec les cires et une tête plutôt hydrophile possédant une certaine affinité avec le TNT. Pour des ratios et des conditions opératoires donnés, il est alors possible de former une émulsion plus ou moins stable dans le temps.

Une telle composition de l'art antérieur, en plus d'inclure de nombreux composants, présente le désavantage de devoir réaliser une émulsion. Une émulsion est un mélange hétérogène de deux substances liquides non miscibles, l'une (le flegmatisant et le tensioactif) étant dispersée sous forme de petites gouttelettes dans l'autre (TNT liquide). Ces deux liquides ne se mélangent pas spontanément. Un aspect macroscopiquement homogène ne peut être obtenu qu'avec des opérations spécifiques d'agitation, mélange, ajout éventuel de principes actifs. Toutefois, l'émulsion demeure microscopiquement hétérogène.

Cette problématique est schématisée sur la figure 1. La référence A représente du TNT 12 liquide. La référence B représente l'ajout de flegmatisant 13 et de tensioactif 14 dans le TNT 12 liquide. La référence C représente l'ensemble TNT 12 liquide et flegmatisant 14 et tensioactif 14, d'apparence homogène, après quelques minutes, par exemple 10 minutes, sous agitation adaptée. Comme expliqué précédemment, cette agitation est très spécifique et nécessite l'adaptation des outils de fabrication existants et une montée en compétence du personnel sur ce type de technologie d'émulsion. De plus, elle peut présenter un risque du fait du fort cisaillement généré par le type d'agitation requise et engendrer un incident pyrotechnique. Enfin, comme on le voit de manière très schématique en référence D, plusieurs minutes voire heures après l'arrêt de l'agitation, l'ensemble TNT 12 liquide et flegmatisant 14 et tensioactif 14 n'est pas complètement homogène.

La figure 2 représente schématiquement le principe de la solubilisation d'une composition explosive fusible/coulable 10 selon l'invention. La référence A' représente du TNT 12 liquide. La référence B' représente l'ajout de flegmatisant 23 dans le TNT 12 liquide selon l'invention. La référence C' représente l'ensemble TNT 12 liquide et flegmatisant 23 après quelques minutes, par exemple 10, sous agitation standard. Enfin, plusieurs minutes après l'arrêt de l'agitation, l'ensemble TNT 12 liquide et flegmatisant 23 selon l'invention est complètement homogène. Il faut souligner qu'en plus d'assurer une homogénéité au niveau microscopique, le mélange du flegmatisant dans le TNT liquide est réalisé par des moyens de mélanges existants, sans difficulté additionnelle.

Comme cela apparaitra clairement dans la description ci-dessous, l'invention concerne une composition explosive fusible/coulable comprenant un explosif fusible et un flegmatisant dont la structure chimique possède de très fortes affinités chimiques avec l'explosif fusible. La molécule de TNT présente de fortes interactions de Van der Waals de par le cycle benzénique et les groupements Nitro en position 2 ,4 et 6. Le TNT est également une forte base de Lewis de par les doublets non liants présents sur les oxygènes des groupements Nitro. Pour assurer une miscibilité et donc une homogénéité maximale de la solution, la structure du flegmatisant selon l'invention présente de fortes interactions de Van der Waals et des fonctions acides de Lewis.

L'invention concerne une composition explosive fusible/coulable 10, qui comprend au moins deux composants qui sont un explosif fusible 12 et un flegmatisant 23 :
- l'explosif fusible 12 étant préférentiellement un aromatique nitré, et encore préférentiellement du trinitrotoluène ;
- le flegmatisant 23 étant soluble à la température de fusion de l'explosif fusible.

Selon l'invention, le flegmatisant 23 est présent en proportion massique non nulle et inférieure ou égale à 10% de la masse totale de la composition explosive fusible/coulable 10.

Selon l'invention, l'explosif fusible est présent en proportion massique supérieure à 20% et inférieure à 100% de la masse totale de la composition explosive fusible/coulable, préférentiellement supérieure à 30% et inférieure à 100% de la masse totale de la composition explosive fusible/coulable, encore préférentiellement supérieure à 40% et inférieure à 100% de la masse totale de la composition explosive fusible/coulable, et encore préférentiellement supérieure à 50% et inférieure à 100% de la masse totale de la composition explosive fusible/coulable. La somme des proportions massiques des composants de la composition explosive fusible/coulable 10 est égale à 100%. Il faut noter que pour une proportion massique de l'explosif fusible inférieure à 30%, il est préférable que le flegmatisant soit présent en proportion massique entre 5 et 10% de la masse totale de la composition explosive fusible/coulable 10. Cela permet à la composition de maintenir une proportion de phase liquide (avant solidification de la composition) suffisante pour assurer une bonne coulabilité de la composition avant sa solidification finale.

En d'autres termes, la composition selon l'invention est composée de l'explosif fusible et jusqu'à 10% en masse d'un flegmatisant avec les caractéristiques mentionnées ci-dessus. Dans ce cas, la proportion massique de l'explosif fusible est adaptée de sorte que la somme des proportions massiques de l'explosif fusible et du flegmatisant arrive à 100%. Dans une variante de l'invention, la composition peut également comprendre des espèces granulaires. Dans ce cas, les proportions sont adaptées de sorte que la somme des proportions massiques de l'explosif fusible, du flegmatisant et des espèces granulaires arrive à 100%. Il faut encore une fois souligner que la composition selon l'invention ne comprend aucun tensioactif ni émulsifiant. En effet, le choix judicieux du flegmatisant permet au flegmatisant de se solubiliser dans l'explosif fusible sous forme liquide, et un mélange traditionnel assure l'homogénéité de la composition. Une fois solubilisé le flegmatisant est parfaitement dispersé dans l'explosif fusible liquide et cette dispersion est conservée jusqu'à la solidification de la matière, qui a généralement lieu dans le corps de la munition.

La composition selon l'invention permet de répondre intrinsèquement aux exigences d'homogénéité après la solidification du chargement explosif dans le corps de la munition.

La composition explosive fusible/coulable comprend un explosif fusible, qui est d'abord fondu. Ensuite, le flegmatisant est incorporé dans l'explosif fusible liquide où il est mélangé pour former un ensemble liquide parfaitement homogène. Cet ensemble liquide est ensuite destiné à être coulé dans une munition où il se solidifiera.

L'explosif fusible est préférentiellement un cycle aromatique nitré, et encore préférentiellement du TNT (2,4,6-trinitrotoluène). Le TNT présente de bonnes propriétés détoniques et une sensibilité aux chocs relativement faible. Le TNT a la particularité de fondre à des températures proches de 80 °C permettant ainsi le chargement à l'état liquide d'une enveloppe métallique (corps de la munition) par la seule action de la gravité. Comme le flegmatisant de l'invention est soluble à la température de fusion de l'explosif fusible (par exemple environ 80,4 °C pour le TNT), les problématiques d'inhomogénéité dans la cuve et dans le projectile après les phases de refroidissement sont grandement limitées. Une fois solubilisé, le flegmatisant est parfaitement dispersé dans le TNT liquide et cette dispersion sera conservée jusqu'à la solidification de la matière. Outre le mélange de l'explosif fusible et du flegmatisant, tous deux sous forme liquide, l'affinité chimique entre le flegmatisant et l'explosif fusible assurée par leur structure chimique garantit un mélange cohérent au niveau moléculaire du mélange obtenu. Après solidification de la composition selon l'invention, le flegmatisant est ainsi parfaitement réparti dans le média formé par l'explosif fusible.

Les explosifs aromatiques nitrés ont une structure de base constituée d'au moins un noyau aromatique et une fonction NO₂. Un exemple d'explosif aromatique nitré peut avoir une structure de base constituée d'au moins un noyau benzénique comportant au moins trois groupements NO₂ et trois autres radicaux désignés par exemple R, R' et R". On peut schématiser une telle molécule par la structure suivante:

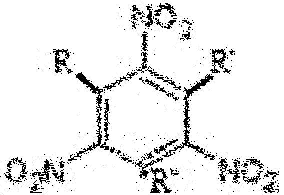

Il existe de nombreux explosifs aromatiques nitrés qui ne sont pas structurés par un noyau benzénique mais plutôt des tétrazoles, triazines, triazoles, pyrazoles et pouvant ne posséder qu'un seul groupement NO₂. Ces explosifs aromatiques nitrés peuvent être l'explosif fusible 12 de la composition selon l'invention.

Pour le 2,4,6-trinitrotoluène, de formule brute C₇H₅N₃O₆, ou C₆H₂(NO₂)₃CH₃, R est un radical -CH3, et R' et R" sont des radicaux -H. A noter qu'il existe aussi trois isomères trinitrotoluène du TNT (2,4,6-trinitrotoluène) : le 2,3,4-, le 2,3,5- et le 2,3,6-trinitrotoluène. Bien que moins utilisés car obtenus en tant que sous-produits de réactions et présentant des propriétés un peu moins intéressantes que le TNT, ces isomères trinitrotoluène du TNT peuvent également être utilisés en tant que composant explosif fusible dans la composition objet de l'invention.

Dans la composition selon l'invention, l'explosif fusible est préférentiellement du TNT, mais d'autres explosifs fusibles conviennent, par exemple le 2,4-Dinitroanisole (DNAN), ou le N-MeTNP (pour le N-méthyltrinitropyrazoles). Les radicaux R, R' et R" pourront être choisis parmi les radicaux: -H, -CH₃, -NHCH₃, -OH, -NH₂ et leurs combinaisons. En tout état de cause, la nature de la molécule miscible est adaptée en fonction de l'explosif fusible choisi.

Dans des variantes de l'invention, le flegmatisant est présent en proportion massique préférentiellement entre 2 à 6% de la masse totale de la composition explosive fusible/coulable, et encore préférentiellement entre 3 et 5% de la masse totale de la composition explosive fusible/coulable. Une proportion accrue de flegmatisant augmente l'insensibilité de la composition aux chocs accidentels, et une proportion accrue d'explosif fusible assure un bon niveau de performance terminale de la munition en termes d'explosif. Il est donc judicieux de choisir le bon ratio entre ces deux composants. Une proportion massique de 2 à 6% de flegmatisant dans la masse totale de la composition permet d'obtenir un bon niveau d'insensibilité tout en conservant de bonnes caractéristiques détoniques. Une proportion massique de 3 à 5% de flegmatisant dans la masse totale de la composition garantit de meilleures caractéristiques détoniques tout en assurant un bon niveau d'insensibilité aux chocs de type incendie, frottements, impact de balle.

La composition selon l'invention offre donc une grande flexibilité sur la mise au point de nouvelles formulations par rapport aux performances terminales ciblées en adaptant simplement le pourcentage massique de ses composants sans impacter les moyens industriels requis ni les compétences nécessaires pour la réalisation d'une telle composition.

Il apparait ainsi clairement que la composition explosive selon l'invention ne nécessite pas de faire appel à l'utilisation d'additifs tels que des tensioactifs, comme cela est obligatoirement le cas pour des compositions de TNT et de cire comme flegmatisant. L'invention permet d'atteindre les performances finales attendues (efficacité terminale et signature MURAT) en éliminant l'utilisation d'additifs, de stabilisants, et en limitant le nombre de constituants dans la formulation. L'invention permet de répondre de manière microscopique aux exigences d'homogénéité issus de l'instruction générale et du STANAG.

D'autres variantes de la composition explosive selon l'invention sont décrites ci-dessous avec des caractéristiques optionnelles, combinables entre elles.

Avantageusement, le flegmatisant a une température de fusion supérieure à celle de l'explosif fusible. Un point de fusion élevé du flegmatisant permet de limiter fortement des problèmes d'exsudation du chargement explosif pendant le cycle de vie de la munition.

Avantageusement, le flegmatisant a une densité supérieure à 1,0, et préférentiellement supérieure à 1,2. La densité du chargement explosif est directement liée à certaines performances de la munition telle que la vitesse de projection des éclats, il est ainsi recherché d'obtenir une densité de chargement explosif la plus élevée possible.

Dans une variante de l'invention, le flegmatisant peut être un dérivé benzénique parmi le benzène, le naphtalène, ou l'anthracène. La structure du flegmatisant présente de fortes interactions de Van der Waals et des fonctions acides de Lewis. Cette structure assure une miscibilité et donc une homogénéité maximale de la solution.

Dans une autre variante de l'invention, le flegmatisant peut être un dérivé d'un parmi le benzène, le naphtalène, ou l'anthracène, fonctionnalisé par un ou plusieurs groupements parmi les groupements hydroxyles, carboxyles, ou sulphonyles. Ces familles de molécules permettent de solubiliser jusqu'à au moins 10 % en masse du flegmatisant dans le milieu liquide, l'explosif fusible, préférentiellement le TNT, ce qui permet de couvrir l'ensemble des exigences actuelles attendues en termes de performances et de sécurité.

Grâce au choix judicieux des propriétés du flegmatisant, la forte affinité chimique au niveau moléculaire entre l'explosif fusible et le flegmatisant assure l'homogénéité du mélange en phase liquide.

Dans un mode de réalisation de l'invention, le flegmatisant est le naphtol, préférentiellement le napht-2-ol. Ce flegmatisant permet de répondre à la problématique d'homogénéité du chargement explosif et compatible de la réglementation ReaCH (réglementation environnementale européenne). En outre, son approvisionnement au long terme est sécurisé. Le flegmatisant napht-2-ol a un point de fusion significativement supérieur à celui du TNT, à savoir 120 °C, et possède une densité de 1,2 très largement supérieure aux valeurs des cires non solubles communément utilisées pour le même type de fonctionnalité de flegmatisation (point de fusion de 30 à 79°C et densité de 0,6 à 0,9). Ce flegmatisant assure la limitation des problèmes d'exsudation du chargement explosif pendant le cycle de vie de la munition et garantit la performance finale.

On peut noter que son isomère, napht-1-ol, convient également en tant que flegmatisant de la composition selon l'invention.

Comme déjà évoqué, la composition explosive fusible/coulable selon l'invention peut comprendre en outre au moins un composant parmi une espèce granulaire inerte et/ou au moins une espèce granulaire énergétique, présente en proportion massique inférieure ou égale à 60% de la masse totale de la composition explosive fusible/coulable, préférentiellement inférieure ou égale à 50% de la masse totale de la composition explosive fusible/coulable. L'espèce granulaire inerte peut comprendre un produit oxydant, tel que les sels de perchlorate, et/ou un produit réducteur, tel que l'aluminium ou le tungstène, à différents pourcentages massiques. L'espèce granulaire énergétique peut comprendre les « High Energy Materials » (HEM) tels que l'ONTA (3-nitro-1,2,4-triazole-5-one, ou oxynitrotriazol), le RDX, le HMX ainsi que les « High Energy density Materials » (HEDM) mais aussi les compositions pyrotechniques telles que le titane carbone et le nickel carbone. L'ajout de ces espèces granulaires énergétiques dans la composition permet d'augmenter les performances détoniques de la composition. Selon la proportion massique de l'espèce granulaire, la proportion massique de l'explosif fusible et du flegmatisant est adaptée, de sorte que la somme des proportions massiques des composants de la composition explosive fusible/coulable 10 est égale à 100%.

On peut donc voir que la composition explosive de l'invention se différencie de la composition divulguée dans le document FR2954308 par le fait qu'elle ne contient pas d'émulsifiant ou autre additif dont le rôle serait de contribuer à la cohésion du mélange. Dans l'invention, l'homogénéité est assurée par un simple mélange de deux espèces : l'explosif fusible liquide et le flegmatisant présentant les propriétés adéquates.

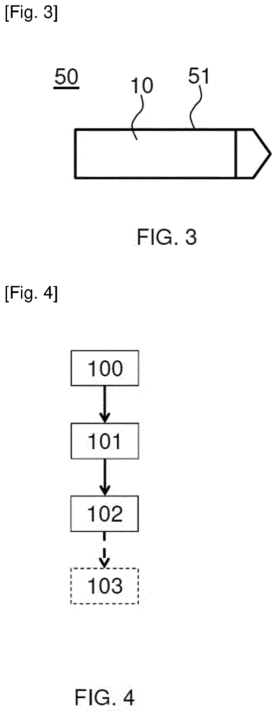

La figure 3 représente schématiquement une munition 50 comprenant une composition explosive fusible/coulable 10 selon l'invention. La munition 50 est délimitée par un corps creux 51, le corps creux 51 étant au moins partiellement rempli par la composition explosive fusible/coulable 10 selon l'invention.

La figure 4 représente un organigramme des étapes d'un procédé de fabrication d'une composition explosive fusible/coulable 10 selon l'invention. Le procédé de fabrication d'une composition explosive fusible/coulable 10 selon l'invention comprend les étapes suivantes :
- fonte (étape 100) de l'explosif fusible 12 ;
- ajout (étape 101) du flegmatisant 23 dans l'explosif fusible 12 fondu ;
- mélange (étape 102) du flegmatisant 23 dans l'explosif fusible 12 fondu pour obtenir un mélange homogénéisé.

L'étape 101 d'ajout du flegmatisant 23 dans l'explosif fusible 12 fondu se fait préférentiellement directement, c'est-à-dire que le flegmatisant 23 sous forme solide à température ambiante est ajouté dans l'explosif fusible 12 liquide. Toutefois, il est également envisageable d'ajouter le flegmatisant 23 déjà sous forme liquide dans l'explosif fusible 12 fondu (liquide). Dans ce cas-là, le flegmatisant est fondu dans une étape préalable à l'étape 101.

L'invention concerne aussi un procédé de chargement explosif d'une munition 50 délimitée par un corps creux 51, comprenant :
- les étapes du procédé de fabrication d'une composition explosive fusible/coulable décrit précédemment ;
- coulée (étape 103) dans le corps creux 51 de la munition 50 du mélange homogénéisé.

Ce procédé concerné par l'invention est le procédé de chargement explosif de munitions par coulé-fondu. Dans l'activité munitionnaire, l'invention est applicable dans le domaine des munitions d'artillerie, navales, aéroportées, bombes, mines, grenades, et têtes militaires.

La mise en place de cette solution dans les chargements explosifs permet de conserver tous les outils et moyens industriels actuels propres au procédé de coulé-fondu et ne demande pas de faire appel à des compétences non maîtrisées de l'homme de métier.

Cette solution est alors compatible et facilement transférable sur des outils standards du procédé de coulé-fondu par les hommes de métier car ne faisant pas appel à des compétences propres à la chimie des émulsions et/ou des outils de production spécifique.

Il ressort que la composition explosive fusible/coulable selon l'invention présente de nombreux avantages. Le flegmatisant soluble dans l'explosif fusible liquide répond par sa nature au problème d'inhomogénéité de par son affinité chimique avec l'explosif fusible. La dispersion du produit est optimale et est conservée dans le temps. La solution apportée par l'invention permet de réduire fortement la plage constatée d'inhomogénéité en concentration du chargement. Des compositions classiques présentent une plage d'inhomogénéité de ± 2 %, alors que la composition selon l'invention a une plage d'inhomogénéité de ± 0,5 %. De plus, la solution proposée par l'invention est directement transférable sur les procédés de mise en oeuvre existants et ne nécessite aucune montée en compétence dans le domaine complexe des émulsions. La composition selon l'invention ne nécessite pas de faire appel à l'ajout d'additifs tels que des tensioactifs, jusqu'alors obligatoirement associés pour une composition à base d'explosif fusible (TNT) et de flegmatisant (cire). L'invention permet un contrôle des performances de la munition en adaptant le pourcentage du flegmatisant dans la composition sans nécessiter de changement au procédé de fabrication mis en oeuvre.

## Revendications

1. Composition explosive fusible/coulable (10), **caractérisée en ce qu'**elle comprend au moins deux composants:
- un explosif fusible (12), l'explosif fusible étant préférentiellement un cycle aromatique nitré, et encore préférentiellement du 2,4,6-trinitrotoluène;
- un flegmatisant (23) soluble à la température de fusion de l'explosif fusible (12),
et **en ce que**
- le flegmatisant (23) est présent en proportion massique non nulle et inférieure ou égale à 10% de la masse totale de la composition explosive fusible/coulable (10), préférentiellement entre 2 à 6% de la masse totale de la composition explosive fusible/coulable (10), et encore préférentiellement entre 3 et 5% de la masse totale de la composition explosive fusible/coulable (10) ;
- l'explosif fusible (12) est présent en proportion massique supérieure à 20% et inférieure à 100% de la masse totale de la composition explosive fusible/coulable (10), préférentiellement supérieure à 30% et inférieure à 100% de la masse totale de la composition explosive fusible/coulable (10), et préférentiellement supérieure à 40% et inférieure à 100% de la masse totale de la composition explosive fusible/coulable (10), et encore préférentiellement supérieure à 50% et inférieure à 100% de la masse totale de la composition explosive fusible/coulable (10), la somme des proportions massiques des composants de la composition explosive fusible/coulable (10) étant égale à 100%.

2. Composition explosive fusible/coulable (10) selon la revendication 1, dans laquelle le flegmatisant (23) a une température de fusion supérieure à celle de l'explosif fusible (12).

3. Composition explosive fusible/coulable (10) selon l'une quelconque des revendications 1 ou 2, dans laquelle le flegmatisant (23) a une densité supérieure à 1,0, préférentiellement supérieure à 1,2.

4. Composition explosive fusible/coulable (10) selon l'une quelconque des revendications 1 à 3, dans laquelle le flegmatisant (23) est un dérivé d'un parmi le benzène, le naphtalène, ou l'anthracène.

5. Composition explosive fusible/coulable (10) selon l'une quelconque des revendications 1 à 4, dans laquelle le flegmatisant (23) est un dérivé benzénique d'un parmi le benzène, le naphtalène, ou l'anthracène, fonctionnalisé par un ou plusieurs groupements parmi les groupements hydroxyles, carboxyles, ou sulphonyles.

6. Composition explosive fusible/coulable (10) selon l'une quelconque des revendications 1 à 5, dans laquelle le flegmatisant (23) est le naphtol, préférentiellement le napht-2-ol.

7. Composition explosive fusible/coulable (10) selon l'une quelconque des revendications 1 à 6, comprenant en outre au moins un composant parmi une espèce granulaire inerte et/ou au moins une espèce granulaire énergétique, présent en proportion massique inférieure ou égale à 60% de la masse totale de la composition explosive fusible/coulable, préférentiellement inférieure ou égale à 50% de la masse totale de la composition explosive fusible/coulable.

8. Munition (50) délimitée par un corps creux (51), **caractérisée en ce que** le corps creux (51) est au moins partiellement rempli par la composition explosive fusible/coulable (10) selon l'une quelconque des revendications 1 à 7.

9. Procédé de fabrication d'une composition explosive fusible/coulable selon l'une quelconque des revendications 1 à 7, comprenant les étapes suivantes :
- fonte (100) de l'explosif fusible (12) ;
- ajout (101) du flegmatisant (23) dans l'explosif fusible (12) fondu ;
- mélange (102) du flegmatisant (23) dans l'explosif fusible (12) fondu pour obtenir un mélange homogénéisé.

10. Procédé de chargement explosif d'une munition (50) délimitée par un corps creux (51), comprenant :
- les étapes du procédé de fabrication d'une composition explosive fusible/coulable selon la revendication 9 ;
- coulée (103) dans le corps creux (51) de la munition (50) du mélange homogénéisé.

## Patentansprüche

1. Schmelzbare/gießbare Sprengstoffzusammensetzung (10), **dadurch gekennzeichnet, dass** sie mindestens zwei Komponenten umfasst:
- einen schmelzbaren Sprengstoff (12), wobei der schmelzbare Sprengstoff vorzugsweise ein nitrierter aromatischer Ring und noch bevorzugter 2,4,6-Trinitrotoluol ist;
- ein Phlegmatisierungsmittel (23), das bei der Schmelztemperatur des schmelzbaren Sprengstoffs (12) löslich ist,
und dadurch, dass
- das Phlegmatisierungsmittel (23) in einem Gewichtsanteil ungleich null und kleiner oder gleich 10 % des Gesamtgewichts der schmelzbaren/gießbaren Sprengstoffzusammensetzung (10) vorliegt, vorzugsweise zwischen 2 und 6 % des Gesamtgewichts der schmelzbaren/gießbaren Sprengstoffzusammensetzung (10), und noch bevorzugter zwischen 3 und 5 % des Gesamtgewichts der schmelzbaren/gießbaren Sprengstoffzusammensetzung (10),
- der schmelzbare Sprengstoff (12) in einem Gewichtsanteil von mehr als 20 % und weniger als 100 % des Gesamtgewichts der schmelzbaren/gießbaren Sprengstoffzusammensetzung (10) vorliegt, vorzugsweise mehr als 30 % und weniger als 100 % des Gesamtgewichts der schmelzbaren/gießbaren Sprengstoffzusammensetzung (10), und vorzugsweise mehr als 40 % und weniger als 100 % des Gesamtgewichts der schmelzbaren/gießbaren Sprengstoffzusammensetzung (10), und noch bevorzugter mehr als 50 % und weniger als 100 % des Gesamtgewichts der schmelzbaren/gießbaren Sprengstoffzusammensetzung (10), wobei die Summe der Massenanteile der Komponenten der schmelzbaren/gießbaren Sprengstoffzusammensetzung (10) 100 % beträgt.

2. Schmelzbare/gießbare Sprengstoffzusammensetzung (10) nach Anspruch 1, wobei das Phlegmatisierungsmittel (23) eine Schmelztemperatur aufweist, die höher ist als die des schmelzbaren Sprengstoffs (12).

3. Schmelzbare/gießbare Sprengstoffzusammensetzung (10) nach einem der Ansprüche 1 oder 2, wobei das Phlegmatisierungsmittel (23) eine Dichte von mehr als 1,0, vorzugsweise von mehr als 1,2, aufweist.

4. Schmelzbare/gießbare Sprengstoffzusammensetzung (10) nach einem der Ansprüche 1 oder 3, wobei das Phlegmatisierungsmittel (23) ein Derivat von einem von Benzol, Naphthalin oder Anthracen ist.

5. Schmelzbare/gießbare Sprengstoffzusammensetzung (10) nach einem der Ansprüche 1 bis 4, wobei das Phlegmatisierungsmittel (23) ein Benzolderivat von einem von Benzol, Naphthalin oder Anthracen ist, das mit einer oder mehreren Gruppen von Hydroxyl-, Carboxyl- oder Sulfonylgruppen funktionalisiert ist.

6. Schmelzbare/gießbare Sprengstoffzusammensetzung (10) nach einem der Ansprüche 1 bis 5, wobei das Phlegmatisierungsmittel (23) Naphthol, vorzugsweise Naphth-2-ol, ist.

7. Schmelzbare/gießbare Sprengstoffzusammensetzung (10) nach einem der Ansprüche 1 bis 6, ferner umfassend mindestens eine Komponente von einer inerten körnigen Spezies und/oder mindestens einer energetischen körnigen Spezies, die in einem Gewichtsanteil von weniger als oder gleich 60 % des Gesamtgewichts der schmelzbaren/gießbaren Sprengstoffzusammensetzung, bevorzugt weniger als oder gleich 50 % des Gesamtgewichts der schmelzbaren/gießbaren Sprengstoffzusammensetzung, vorliegt.

8. Munition (50), die von einem Hohlkörper (51) begrenzt wird, **dadurch gekennzeichnet, dass** der Hohlkörper (51) mindestens teilweise mit der schmelzbaren/gießbaren Sprengstoffzusammensetzung (10) nach einem der Ansprüche 1 bis 7 gefüllt ist.

9. Verfahren zur Herstellung einer schmelzbaren/gießbaren Sprengstoffzusammensetzung nach einem der Ansprüche 1 bis 7, folgende Schritte umfassend:
- Schmelzen (100) des schmelzbaren Sprengstoffs (12);
- Zugeben (101) des Phlegmatisierungsmittels (23) in den geschmolzenen schmelzbaren Sprengstoff (12);
- Mischen (102) des Phlegmatisierungsmittels (23) in dem geschmolzenen schmelzbaren Sprengstoff (12), um eine homogenisierte Mischung zu erzielen.

10. Verfahren zum Beladen einer Munition (50), die durch einen Hohlkörper (51) begrenzt ist, mit Sprengstoff, Folgendes umfassend:
- die Schritte des Verfahrens zur Herstellung einer schmelzbaren/gießbaren explosiven Sprengstoffzusammensetzung nach Anspruch 9;
- Gießen (103) der homogenisierten Mischung in den Hohlkörper (51) der Munition (50).

## Claims

1. A meltable/castable explosive composition (10), **characterised in that** it comprises at least two components:
- a meltable explosive (12), the meltable explosive being preferably a nitrated aromatic ring, and more preferably 2,4,6-trinitrotoluene;
- a desensitiser (23) soluble at the melting temperature of the meltable explosive (12),
and **in that**
- the desensitiser (23) is present in a non-zero proportion by mass less than or equal to 10% of the total mass of the meltable/castable explosive composition (10), preferably between 2 to 6% of the total mass of the meltable/castable explosive composition (10), and more preferably between 3 to 5% of the total mass of the meltable/castable explosive composition (10);
- the meltable explosive (12) is present in a proportion by mass of more than 20% and less than 100% of the total mass of the meltable/castable explosive composition (10), preferably more than 30% and less than 100% of the total mass of the meltable/castable explosive composition (10), and preferably more than 40% and less than 100% of the total mass of the meltable/castable explosive composition (10), and more preferably more than 50% and less than 100% of the total mass of the meltable/castable explosive composition (10), the sum of the proportions by mass of the components of the meltable/castable explosive composition (10) being 100%.

2. The meltable/castable explosive composition (10) according to claim 1, wherein the desensitiser (23) has a melting temperature greater than that of the meltable explosive (12).

3. The meltable/castable explosive composition (10) according to any one of claim 1 or 2, wherein the desensitiser (23) has a density greater than 1.0, preferably greater than 1.2.

4. The meltable/castable explosive composition (10) according to any one of claims 1 to 3, wherein the desensitiser (23) is a derivative of one of benzene, naphthalene or anthracene.

5. The meltable/castable explosive composition (10) according to any one of claims 1 to 4, wherein the desensitiser (23) is a benzenic derivative of one of benzene, naphthalene and anthracene which is functionalised with one or more groups from hydroxyl, carboxyl or sulfonyl groups.

6. The meltable/castable explosive composition (10) according to any one of claims 1 to 5, wherein the desensitiser (23) is naphthol, preferably naphth-2-ol.

7. The meltable/castable explosive composition (10) according to any one of claims 1 to 6, further comprising at least one component from an inert granular species and/or at least one energetic granular species, present in a proportion by mass of 60% or less of the total mass of the meltable/castable explosive composition, preferably of 50% or less of the total mass of the meltable/castable explosive composition.

8. An ammunition (50) delimited by a hollow body (51), **characterised in that** the hollow body (51) is at least partially filled with the meltable/castable explosive composition (10) according to any one of claims 1 to 7.

9. A method for manufacturing a meltable/castable explosive composition according to any one of claims 1 to 7, comprising the following steps
- melting (100) the meltable explosive (12);
- adding (101) the desensitiser (23) to the molten meltable explosive (12);
- mixing (102) the desensitiser (23) into the molten meltable explosive (12) to obtain a homogenised mixture.

10. A method for explosively charging an ammunition (50) delimited by a hollow body (51) comprising:
- the steps of the method for manufacturing a meltable/castable explosive composition according to claim 9;
- casting (103) the homogenised mixture into the hollow body (51) of the ammunition (50).
